# EUROPEAN PATENT APPLICATION

(11) **EP 1 096 454 A2**
(43) Date of publication of application: **02.05.2001**
(21) Application number: 00122237.1
(22) Date of filing: 17.10.2000
(51) Int. Cl.: G08C 17/02, H04Q 9/02

(54) **Automatic meter reading system**

(30) Priority: 27.10.1999 US 428083
(71) Applicant: TRW Inc., Redondo Beach, California 90278 (US)
(72) Inventor: Fischer, Gerald R., Playa Del Rey, CA 90293 (US); Allen, Barry R., Redondo Beach, CA 90277 (US); Dunbridge, Barry (NMI), Torrance, CA 90505 (US); McIver, George W., Redondo Beach, CA 90277 (US)
(74) Representative: Schmidt, Steffen J., Dipl.-Ing.

(57) **Abstract**

An automatic meter transponder system (10) for reading a meter from a remote location. The transponder system (10) includes receiver and transmitter components integrated on a pair of chips, including an analog circuit (14), a digital circuit (16), a modulator transmitter circuit (20), a RAM (18) and a microprocessor (22). The analog circuit (14) provides RF and intermediate frequency analog receiver functions, such as RF gain, frequency downconversion and base-band gain. The analog circuit (14) includes an analog-to-digital converter (72, 74), a crystal oscillator (44), a phase-locked loop and a local oscillator synthesizer (50). The analog circuit (14) generates downconverted in-phase and quadrature-phase digital signals representative of the received RF signal from an antenna (12). The digital circuit (16) includes numerically controlled oscillation, digital I/Q derotate (102), signal detection, non-coherent signal averaging and circuit wake-up. The digital circuit (16) causes the burst I and Q signals to be stored in the RAM (18) when they are received, and employs the circuit wake-up to wake up the microprocessor (22) to receive the data.

## Description

### BACKGROUND OF THE INVENTION

### 1. Field of the Invention

This invention relates generally to an automatic meter transponder system and, more particularly, to a low loss and low cost automatic meter transponder system for interrogating meters, where the system has increased range and reliability over conventional meter reading systems, and includes a receiver and transmitter integrated on a pair of chips.

### 2. Discussion of the Related Art

Commercial and residential structures typically are equipped with various meters that provide an indication of the amount of use of certain consumables, such as electric, gas, water, etc. Utility companies make use of such meters for billing purposes. To monitor the user's consumption, conventional utility meters are typically mechanical devices that require a meter reader to physically read a visual indication of the meter output. Meter reading of this type has a high labor cost and a significant level of inaccuracy attributable to human error.

To eliminate these drawbacks, state of the art utility meters are electrical devices that may be equipped with a transponder to enable the meter to be read by a receiver from a remote location. For one type of electrical meter, it is still necessary for a meter reader to walk to each meter. The meter reader would carry a corresponding transponder so that once the meter reader was within a certain distance of the meter, a signal would be sent that caused the meter transponder to return a signal including data of the consumption of the utility.

In other designs, a utility company may provide a mobile transponder in a vehicle that is in communication with many meter transponders. The meter reader would travel through a certain area and broadcast coded signals to the meter transponders. The coded signals cause selected ones of the meter transponders to transmit a signal indicative of the use of the consumable back to the mobile transponder for storage and billing. This design also includes providing a transponder on a telephone pole or the like, where a signal on a phone line causes the pole mounted transponder to interrogate the several meter transponders to provide a signal indicative of the use of the consumable. Conventional transponder and interrogator systems can be used for this purpose.

Existing architectures for automatic meter reading remote transponders are limited in performance and are complex. Additionally, the power requirements defined by FCC regulations and the like limit the usable range of such transponders, and thus limit the number of meters they can be interrogated within a certain distance. What is needed is an automatic meter transponder system that is low cost and has greater range than those known in the art. It is therefore an object of the present invention to provide such a transponder system.

### SUMMARY OF THE INVENTION

In accordance with the teachings of the present invention, an automatic meter transponder system is disclosed for reading several meters from a remote location. The transponder system includes receiver and transmitter communications components integrated on a pair of chips. The communications components include an analog circuit, a digital circuit, a modulator transmitter circuit, a RAM and a microprocessor.

The analog circuit provides RF and intermediate frequency analog receiver functions, such as RF gain, frequency downconversion and base-band gain. The analog circuit includes an analog-to-digital converter, a crystal oscillator, a phase-locked loop and a local oscillator synthesizer. The analog circuit generates downconverted in-phase and quadrature-phase digital signals modulated on an intermediate frequency representative of the received RF signal from an antenna.

The digital circuit includes numerically controlled oscillation, digital I/Q derotate, signal detection, non-coherent signal averaging and circuit wake-up. The digital circuit causes the burst I and Q signals to be stored in the RAM when they are received, and employs the circuit wake-up to notify the microprocessor to power-up and receive the data.

Additional objects, advantages and features of the present invention will become apparent from the following description and appended claims, taken in conjunction with the accompanying drawings.

### BRIEF DESCRIPTION OF THE DRAWINGS

Figure 1 is schematic block diagram of a transceiver for an automatic meter transponder system, according to an embodiment of the present invention;
Figure 2 is a schematic block diagram of an analog section of the transceiver shown in Figure 1; and
Figure 3 is a schematic block diagram of a digital section of the transceiver shown in Figure 1.

### DETAILED DESCRIPTION OF THE PREFERRED EMBODIMENTS

The following description of the preferred embodiments directed to an automatic meter transponder system is merely exemplary in nature, and is in no way intended to limit the invention or its applications or uses.

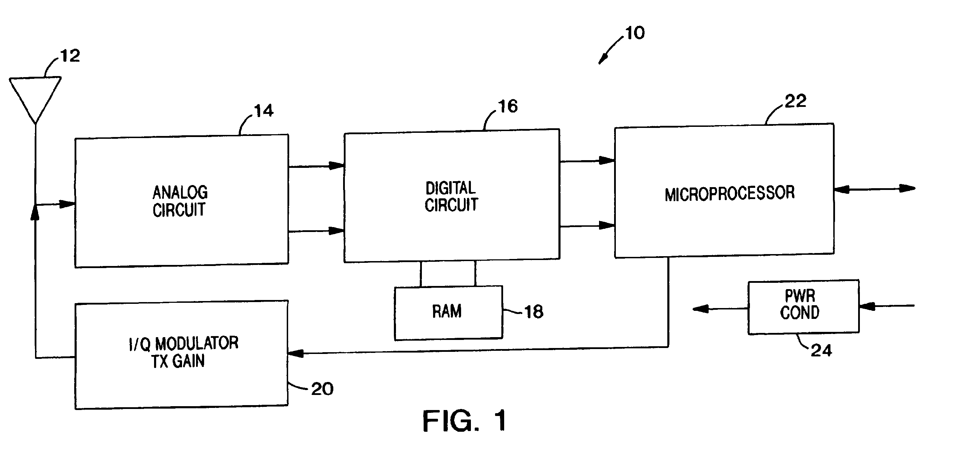

Figure 1 is a block diagram of a transceiver 10 for transmitting and receiving RF signals, typically in the 300-500 MHz range, and has an intended application for an automatic meter transponder system for remotely reading meters mounted on commercial and residential structures. The transceiver 10 is bi-directional in that it both transmits and receives RF signals. The transceiver 10 is universal because both the meter transponder and interrogator transponder would include a transceiver 10. The meter reading transceiver is an interrogator that can be positioned on a mobile platform, such as a vehicle, and send coded interrogation signals to the several meters in a particular area. Alternately, the interrogator transceiver can be positioned at a permanent location, such as on a telephone pole, where signals on the phone line can instruct the interrogator transceiver to send out interrogation signals to the various transceivers mounted on the meters within the interrogation range. If the transceiver 10 is used for the interrogation part of the transponder system, it would include multiple channels.

The transceiver 10 includes an antenna 12 that is responsive to RF signals in the desired frequency band, and transmits signals generated by the transceiver 10. The transceiver 10 further includes an analog circuit 14 that provides RF and intermediate frequency (IF) analog receiver functions, such as RF gain, frequency downconversion, and base-band gain, an analog-to-digital convertor, a crystal oscillator, a phase-locked loop (PLL), and a local oscillator (LO) synthesizer, as will be described in detail below. In-phase (I) and quadrature-phase (Q) digital signals, representative of the received RF signal from the antenna 12 are output from the analog circuit 14.

Additionally, the transceiver 10 includes a digital circuit 16 and associated random access memory (RAM) 18 that provides digital processing functions. These digital functions include numerically controlled oscillation, digital I/Q derotate, signal detection, non-coherent averaging and circuit wake-up, that will also be described in detail below. An I/Q modulator 20 provides modulation of the signal to be transmitted. A microprocessor 22 is connected to the digital circuit 16 and the modulator 20, and controls the operation of the transceiver 10. The microprocessor 22 provides encrypted I and Q data to the modulator 20 to be modulated for transmission. A power conditioner 24 provides DC power to the transceiver 10, and may, for example, convert a 12 volt DC signal to a 3 volt DC signal.

The microprocessor 22 receives frequency, phase and time information from the digital circuit 16, and decrypts the information to generate the data. The microprocessor 22 will be programmed with the appropriate codes to be encrypted on the particular signal to be transmitted by the antenna 12 to notify a particular transceiver 10 mounted to a meter to send its encrypted data back to the interrogation transceiver for storage. Each separate meter transceiver would include its own special identification code so that the interrogator transceiver could separately identify each one.

In this design, the signals are transmitted between the interrogator transceiver and the meter transceiver using phase-shift keying (QPSK). However, other types of transmission coding and keying can be used within the scope of the present invention.

I and Q values are assigned to represent pairs of bits. Thus, 00 may use a phase angle of 45°, 01 may use a phase angle of -45°, 10 may use a phase angle of 135°, and 11 may use a phase angle of -135°. A transmitted 00 signal value, for example, takes the form of approximately 0.7 ACos(wt)-0.7ASin(wt) or ICos(wt)-QSin(wt), where A is a constant and wt is the carrier frequency. Thus, even if 00 is transmitted constantly, the I and Q values will vary over positive and negative values by the sine and cosine terms.

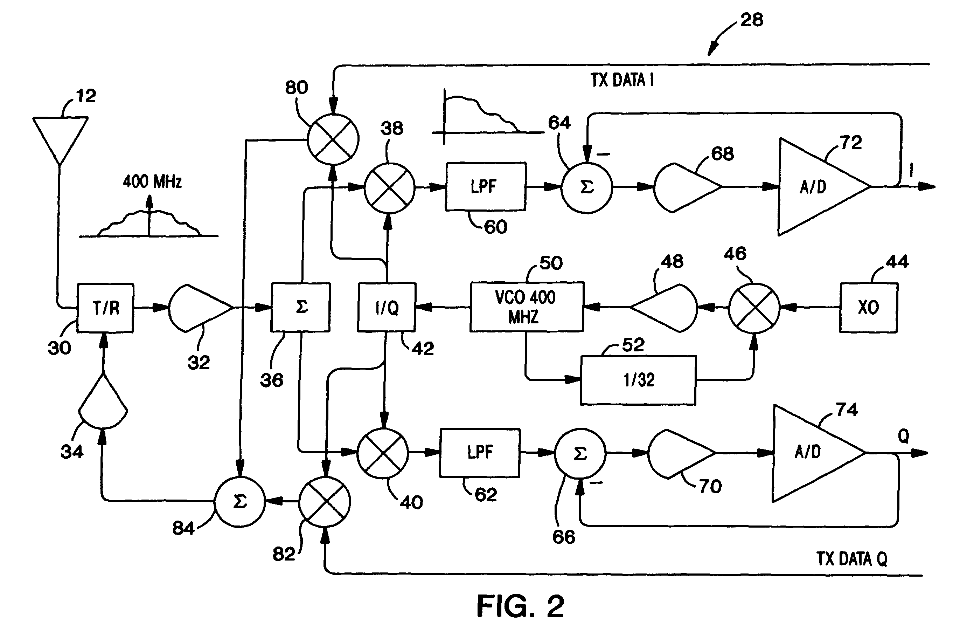

Figure 2 is a schematic block diagram of a circuit 28 including the analog circuit 14 and the modulator 20. The circuit 28 includes a transmit/receive switch 30, a receiver amplifier 32 and a transmitter amplifier 34. The transmit/receive switch 30 controls whether the transceiver 10 is receiving RF signals or transmitting RF signals. The transmit/receive switch 30 may be implemented as an analog multiplexer, or other switching element, suitable for the purposes discussed herein. Alternatively, buffers having an output disable control may be used to isolate the transmitter path from the receiver path. The receiver amplifier 32 receives the RF signals from the antenna 12 when the switch 30 is in the receive mode, and acts to boost the RF signal for processing. Likewise, the transmitter amplifier 34 acts to boost the RF signal generated by the transceiver 10 when the switch 30 is in the transmit mode.

The circuit 28 further includes a signal splitter 36, a downconverter I-mixer 38, a downconverter Q-mixer 40 and an I/Q oscillator phase shifter 42 that combine to provide an I/Q downconverter. When the transceiver 10 is in the receive mode, the received signals from the amplifier 32 are applied to the splitter 36. The splitter 36 splits the signal and transfers identical copies of the signal to the mixers 38 and 40.

The circuit 28 further includes a crystal oscillator 44, a phase detector 46, an amplifier 48, and a voltage control oscillator (VCO) 50 that operate as a phase-locked loop. A 1/32 divider 52 provides a closed loop between the VCO 50 and the phase detector 46. The crystal oscillator 44 provides an output frequency at, for example, 12.5 MHz. The phase detector 46 generates a difference signal that is the difference in the phase between the output of the oscillator 44 and the divided down output of the VCO 50, as determined by the divider 52. The difference signal is amplified by the amplifier 48 and applied to the VCO 50 to control its output. This operation provides a frequency multiplier that generates an output signal with a frequency that is thirty-two times greater than the frequency of the oscillator 44, and thus acts as a stable frequency source. Of course, other dividers can be used besides a 1/32 divider to provide different output frequencies.

The phase shifter 42 receives the controlled frequency from the VCO 50 and provides the frequency signal to the mixers 38 and 40, phase shifted relative to each other by 90°. The frequency content of the split signal applied to the mixer 38 generates a difference frequency that is the difference of the frequency of the received signal minus the frequency generated by the VCO 50, and a sum frequency that is the sum of the frequency of the received signal plus the frequency generated by the VCO 50. Likewise, the mixer 40 generates a difference frequency that is also the received signal minus the frequency of the VCO 50, and a sum frequency that is the received signal plus the frequency of the VCO 50. For example, if the frequency content of the received signal is centered around 399.9 MHz and the output of the VCO 50 is 400.0 MHz, the difference frequency is 100 KHz and the sum frequency is 799.9. The output from the mixers 38 and 40 are thus the same signal, representative of the received signal, that are shifted 90° apart in phase. This downconversion process uses the difference frequency as an intermediate frequency (IF) of the received signal to be processed.

The mixing process generates a signal (harmonic) at the VCO frequency plus the IF. By providing the two difference signals (IF signals) that are 90° apart in phase, the transceiver 10 is able to provide discrimination for those received signals that are above the VCO frequency. This type of discrimination allows for noise reduction at the IF caused by the transceiver components. By removing the intermediate frequency noise signal due to input noise above the 400 MHz of the VCO 50, a 3dB reduction can be achieved.

The I frequency signal from the mixer 38 is applied to a low pass filter (LPF) 60 and the Q frequency signal from the mixer 40 is applied to an LPF 62 to eliminate the sum frequency term from the mixers 38 and 40. Alternatively, the I and Q low pass filters 60 and 62 can be replaced with bandpass filters with a passband centered around the intermediate frequency and a bandwidth corresponding to the bandwidth of the signals transmitted and received. Using bandpass filters provides the benefit of immediately eliminating DC offsets in the signals.

Preferably, the intermediate frequency is substantially above DC to prevent the DC offsets in the processing components from interfering with the downconverted received signals. The downconverted I and Q signals from the low pass filters 60 and 62 are adjusted by summers 64 and 66, respectively, to eliminate the DC offsets from the processing circuits. The summers 64 and 66 provide signal averaging over a certain sample period. These signals are then amplified by amplifiers 68 and 70, respectively, and then converted to digital representations of the frequency signals by analog-to-digital (A/D) converters 72 and 74, respectively. By applying the output of the A/D converters 72 and 74 to the summer 64 and 66, respectively, the DC offset generated by the converters 72 and 74 can also be eliminated. Alternatively, if the DC offset is small relative to the signal plus noise, simple AC coupling may be used. The I and Q A/D converters 72 and 74 are preferably one-bit analog-to-digital converters, although multi-bit converters are also possible.

In the transmit mode, the desired signal to be transmitted, for example an interrogation signal, is generated by the microprocessor 22 and is separated into I and Q component signals at the intermediate frequency. The I frequency signal is applied to an upconverter I mixer 80, and the Q component is applied to an upconverter Q mixer 82. Additionally, the separated I and Q components of the VCO signal from the VCO 50 are also applied to the mixers 80 and 82, respectively. Output signals from the mixers 80 and 82 are the same upconverted signal to be transmitted, but separated by 90° in phase. The I and Q components are applied to a summer 84 that adds the signals. The summer 84 eliminates the product of the signal that is the sum or difference of the intermediate frequency added to the VCO frequency. The switch 30 is in the transmit mode, which receives the signal from the amplifier 34 to be transmitted by the antenna 12.

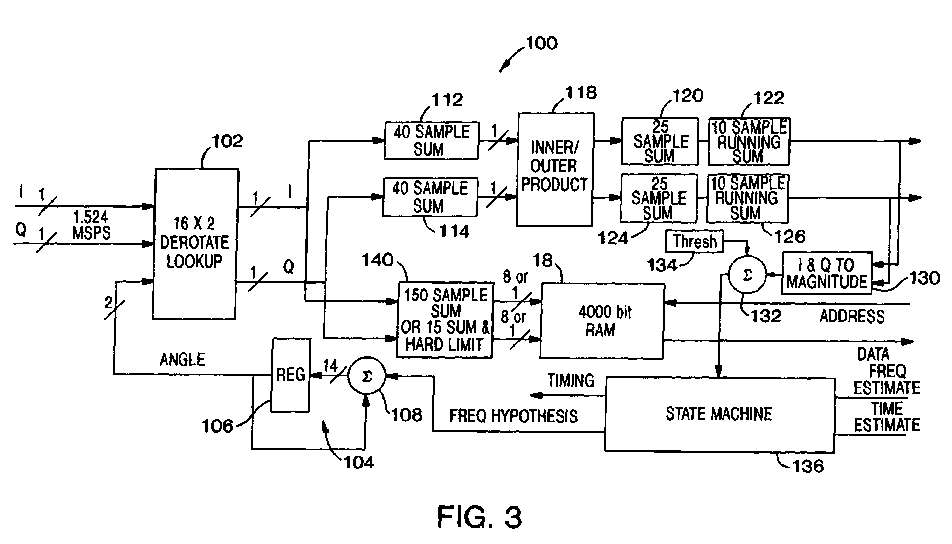

Figure 3 is a schematic block diagram 100 of the digital circuit 16. The I and Q one-bit outputs from the A/D converters 72 and 74, respectively, are applied to a 16 X 2 derotater 102 including look-up table. The I and Q signals are one-bit signals 90° apart in phase, and alternate between one and zero at the 100 kHz rate. The I and Q components of the received signal represent its phase angle, and if the frequency is not at the representative frequency, 400 MHz in this design, will cause the signal to rotate in polar coordinates. The derotator 102 prevents rotation of the I and Q components in one of either the clockwise or counterclockwise direction.

A two-bit phase angle input from an accumulator 104, including a register 106 and a summer 108, is also applied to the derotater 102. Because the register 106 is incremented with a constant value by a frequency hypothesis signal from the microprocessor 22, it accumulates in value and rolls over at a constant frequency. The combination of the derotator 102 and the accumulator 104 act as a downconverter that removes the intermediate frequency from the digital I and Q signals. The downconversion operates at the particular intermediate frequency. Because the intermediate frequency may vary over time, temperature and signal path conditions, the microprocessor 22 tunes the accumulator 104 using the frequency hypothesis signal. By changing the value added at each clock pulse, the register 106 can be tuned to roll over more or less rapidly. The two most significant bits of the register 106 are therefore a programmable frequency output and provide a representation of its phase angle. The two most significant bits from the accumulator 104 provide one of four possible phase angle ranges for the selected intermediate frequency. The two most significant bits may therefore follow the desired intermediate frequency carrying the digital I and Q values for each of the four quadrants. The derotater 102 can then be indexed according to the quadrant indicated by the most significant bits and the sampled I and Q signal values.

The output of the derotator 102 is a one-bit I output and a one-bit Q output that are applied to separate summers 112 and 114, respectively. In this embodiment, the summers 112 and 114 are 40 sample summers that accumulate the I and Q outputs over 40 samples and then reset. These I and Q outputs may be rotating at some certain speed relative to polar coordinates, as discussed above. As long as the I and Q outputs are not rotating too fast, and rotation of the I and Q outputs does not go through a full revolution during each sample period, the summers 112 and 114 output the I and Q signals, respectively. If the I and Q outputs are rotating too fast, the output of the summers 112 and 114 will go to zero. Therefore, the summers 112 and 114 reject signals that are rotating above a certain frequency. In this design, the combination of the derotate 102 and the summers 112 and 114 act as a bandpass filter that is tuned to 100kHz. The outputs I and Q therefore must be near 100 kHz in order to pass through the summers 112 and 114. Of course, the transceiver 10 can be designed to pass other intermediate frequencies.

The filtered outputs from the summers 112 and 114 are applied to an inner/outer product circuit 118 that calculates the degree of correlation between successive I and Q samples from the summers 112 and 114. The inner/outer product 118 provides a signal of whether the I and Q signals from the summers 112 and 114 are at the desired 100 kHz or are varying therefrom. The I signal from the inner/outer product 118 is first applied to a 25 sample summer 120 and then to a 10 sample running summer 122 to provide signal averaging for further noise reduction. Likewise, the Q signal from the inner/outer product 118 is applied to a 25 sample summer 124 and then to a 10 sample running summer 126 for the same purpose.

The transceiver 10 is designed so that the microprocessor 22 can operate on received data bursts that have been stored in the RAM 18. Additionally, the transceiver 10 shuts down the microprocessor 22 when it is not receiving data. The summers 112, 114, 120, 122, 124, 126 and the inner/outer products circuit 118 are part of a wake-up detection circuitry designed for this purpose. The wake-up detection circuitry saves battery power, and reduces the cost of the circuitry. The filtered I and Q signals are applied to an I and Q magnitude circuit 130 to convert the frequency signals to a representative magnitude. The I and Q magnitude signals from the magnitude circuit 130 are applied to a summer 132 to determine whether the magnitude is above a threshold provided by a threshold circuit 134. The output of the summer 132, that is above the threshold, is applied to a state machine 136, and acts as a wake-up signal for the microprocessor 22. Therefore, the magnitude circuit 130, the summer 132 and the threshold circuit 134 combine with the detector portion to provide a wake-up detector detecting a signal at or near 100 kHz.

At the same time that the I and Q signals are being applied to the summers 112 and 114, they are also being applied to a summer and hard limit circuit 140. In this design, the circuit 140 is a 150 sample summer or a 15 sample summer and hard limit The circuit 140 also provides filtering by averaging. The filtered I and Q signals from the circuit 140 are applied to the RAM 18 that stores the incoming signal prior to when the microprocessor 22 has been woken up, and thereafter. In one example, the RAM 18 always has stored within it the signal received during the last 20 ms time period. Within that 20 ms time period is the burst of information being received by the transceiver 10. Once the microprocessor 22 is woken up, it can then address the RAM 18 on the address line, which then outputs the desired data to the microprocessor 22 for processing.

The meter transponder system discussed above has many advantages over the conventional transponder systems known in the art. For example, the transceiver 10 can be made at a reduced cost and have a longer range. Additionally, the transceiver 10 can provide improved path loss and non-line-of-sight signal penetration as a result of lower transmitted frequencies.

The foregoing discussion discloses and describes merely exemplary embodiments of the present invention. One skilled in the art will readily recognize from such discussion, and from the accompanying drawings and claims, that various changes, modifications and variations can be made therein without departing from the spirit and scope of the invention as defined in the following claims.

## Claims

1. An automatic meter transponder system for providing communications between an interrogator transceiver and a plurality of meter transceivers, each of the meter transceivers being mounted on a separate meter and said interrogator transceiver being remote therefrom, said interrogator transceiver transmitting a coded signal to the meter transceivers and said meter transceivers transmitting meter data to be received by the interrogator transceiver in response to receiving the coded signal, at least one of the transponder receivers or the meter transceivers comprising:
an antenna for transmitting and receiving signals including the coded signal or the meter data;
an analog section coupled to the antenna, said analog section including an intermediate frequency (IF) downconverter generating an IF in-phase (I) signal and an IF quadrature-phase (Q) signal representative of the signal received by the antenna, said in-phase signal and said quadrature-phase signal including the same IF separated by 90° in-phase, said downconverter including an I/Q phase shifter, an I downconverter mixer, a Q downconverter mixer and a local oscillator circuit, said local oscillator circuit generating a local oscillator signal, said phase shifter being responsive to the local oscillator signal from the local oscillator circuit and generating a local oscillator in-phase signal and a local oscillator quadrature-phase signal, said I mixer being responsive to the received signal and the local oscillator in-phase signal and generating the IF in-phase signal and said Q mixer being responsive to the received signal and the local oscillator quadrature-phase signal and generating the IF quadrature-phase signal, said analog section generating a digital in-phase signal and a digital quadrature-phase signal from the IF in-phase signal and the IF quadrature-phase signal;
a digital section responsive to the digital in-phase signal and the digital quadrature-phase signal from the analog section, said digital section including a wake-up detector generating a transceiver wake-up signal in response to the in-phase and quadrature-phase signals; and
a processor responsive to the wake-up signal from the digital section, said processor activating and processing the digital in-phase signal and the digital quadrature-phase signal after receiving the wake-up signal.

2. The system according to claim 1 wherein the analog section further includes a first filter responsive to the IF in-phase signal and a second filter responsive to the IF quadrature-phase signal, said first and second filters filtering out a sum frequency term associated with the IF generated by the I and Q mixers.

3. The system according to claim 1 wherein the local oscillator circuit includes a voltage controlled oscillator, a crystal oscillator, a phase detector and a divider operating as a phase-locked loop, said phase detector being responsive to an oscillator signal from the crystal oscillator and a divided signal from the divider and generating a difference signal as the difference in the phase between the oscillator signal and the divider signal, said voltage controlled oscillator being responsive to the difference signal and outputting the oscillator signal to the divider and the phase shifter.

4. The system according to claim 1 wherein the transceiver further comprises a modulator transmitter circuit including an I upconverter mixer, a Q upconverter mixer and a summer, said I upconverter mixer being responsive to an in-phase data signal from the processor and the local oscillator in-phase signal from the phase shifter and generating an upconverted in-phase signal, and said Q upconverter mixer being responsive to a quadrature-phase data signal from the processor and the local oscillator quadrature-phase signal from the phase shifter and generating an upconverted quadrature-phase signal, said summer being responsive to the upconverted in-phase signal and the upconverted quadrature-phase signal and generating a modulated transmitter signal to be transmitted by the antenna.

5. The system according to claim 1 wherein the digital section further includes an I/Q derotator and accumulator, said accumulator generating a phase signal having a value determined by a frequency input signal, said I/Q derotator being responsive to the digital in-phase and the digital quadrature-phase signals form the analog section and the phase angle signal from the accumulator, said derotator providing downconversion for removing the intermediate frequency from the in-phase and quadrature-phase signals.

6. The system according to claim 1 wherein the wake-up detector includes an inner/outer product circuit and a non-coherent averaging circuit, said inner/outer circuit calculating the degree of correlation between successive in-phase and quadrature-phase signals from the analog section.

7. The system according to claim 1 wherein the digital section further includes an averaging filter and a storage device, said averaging filter being responsive to the digital in-phase and digital quadrature-phase signals from the analog section and providing signal filtering, said storage device storing the in-phase and quadrature-phase signals for the microprocessor when the processor receives the wake-up signal.

8. An automatic meter transponder system for providing communications between an interrogator transceiver and a plurality of meter transceivers, each of the meter transceivers being mounted on a separate meter and said interrogator transceiver being remote therefrom, said interrogator transceiver transmitting coded signals to the meter transceivers and said meter transceivers transmitting meter data to be received by the interrogator transceiver in response to receiving the coded signals, each of the transceivers comprising:
an antenna for transmitting and receiving signals including the coded signals and the meter data;
an analog section coupled to the antenna, said analog section including an intermediate frequency (IF) downconverter generating an IF in-phase (I) signal and an IF quadrature-phase signal representative of the signals received by the antenna, said in-phase signal and said quadrature-phase signal including the same IF separated by 90° in-phase, said analog section generating a digital in-phase signal and a digital quadrature-phase signal from the IF in-phase signal and the IF quadrature-phase signal;
a digital section responsive to the digital in-phase signal and the digital quadrature-phase signal from the analog section, said digital section including a wake-up detector and a data storage device, said wake-up detector generating a transceiver wake-up signal in response to the digital in-phase and digital quadrature-phase signal, said storage device simultaneously storing the digital in-phase signal and the digital quadrature-phase signal when the wake-up detector is generating the wake-up signal; and
a processor responsive to the wake-up signal from the digital section, said processor retrieving data from the storage device when it receives the wake-up signal.

9. The system according to claim 8 wherein the IF downconverter includes an I/Q phase shifter, an I downconverter mixer, a Q downconverter mixer and a local oscillator circuit, and wherein the local oscillator circuit includes a voltage controlled oscillator, a crystal oscillator, a phase detector and a divider operating as a phase-locked loop, said phase detector being responsive to an oscillator signal from the crystal oscillator and a divided signal from the divider and generating a difference signal as the difference in the phase between the oscillator signal and the divider signal, said voltage controlled oscillator being responsive to the difference signal and outputting the oscillator signal to the divider, said phase shifter being responsive to the local oscillator signal form the local oscillator circuit and generating a local oscillator in-phase signal and a local oscillator quadrature-phase signal, said I mixer being responsive to the received signal and the local oscillator in-phase signal and generating the IF in-phase signal and said Q mixer being responsive to the received signal and the local oscillator quadrature-phase signal and generating the IF quadrature-phase signal.

10. The system according to claim 9 wherein the transceiver further comprises a modulator transmitter circuit including an I upconverter mixer, a Q upconverter mixer and a summer, said I upconverter mixer being responsive to an in-phase data signal from the processor and the local oscillator in-phase signal from the phase shifter and generating an upconverted in-phase signal, and said Q upconverter mixer being responsive to a quadrature-phase data signal from the processor and the local oscillator quadrature-phase signal from the phase shifter and generating an upconverted quadrature-phase signal, said summer being responsive to the upconverted in-phase signal and the upconverted quadrature-phase signal and generating a modulated transmitter signal to be transmitted by the antenna.

11. The system according to claim 8 wherein the wake-up detector further includes an in-phase and quadrature-phase magnitude circuit for converting the in-phase and the quadrature-phase signals to representative in-phase and quadrature-phase magnitude signals.

12. The system according to claim 8 wherein the wake-up detector further includes a summation circuit and a thresholding circuit, said summation circuit being responsive to the in-phase and quadrature-phase magnitude signals and a threshold signal form the threshold circuit, said summation circuit outputting the wake-up signal to the processor to wake-up the processor if the magnitude signal is greater than the threshold.

13. An automatic meter transponder system for providing communications between an interrogator transceiver and a plurality of meter transceivers, each of the meter transceivers being mounted on a separate meter and said interrogator transceiver being remote therefrom, said interrogator transceiver transmitting coded signals to the meter transceivers and said meter transceivers transmitting meter data to be received by the interrogator transceiver in response to receiving the coded signals, each of the transceivers comprising:
an antenna for transmitting and receiving signals including the coded signals and the meter data;
an analog section coupled to the antenna, said analog section including an intermediate frequency (IF) downconverter generating an IF in-phase (I) signal and an IF quadrature-phase signal representative of the signals received by the antenna, said in-phase signal and said quadrature-phase signal including the same IF separated by 90° in-phase, said downconverter including an I/Q phase shifter, an I downconverter mixer, a Q downconverter mixer and a local oscillator circuit, said phase shifter being responsive to the local oscillator signal from the local oscillator and generating a local oscillator in-phase signal and a local oscillator quadrature-phase signal, said I mixer being responsive to the received signal and the local oscillator in-phase signal and generating the IF in-phase signal and said Q mixer being responsive to the received signal and the local oscillator quadrature-phase signal and generating the IF quadrature-phase signal, said analog section further including a first analog-to-digital converter receiving the IF in-phase signal and generating a digital in-phase signal and a second analog-to-digital converter responsive to the IF quadrature-phase signal and generating a digital quadrature-phase signal, said analog section further including a first summer and a second summer, said first summer being responsive to the IF in-phase signal and the digital in-phase signal from the first analog-to-digital converter, and said second summer being responsive to the IF quadrature-phase signal and the digital quadrature-phase signal from the second analog-to-digital converter, said first and second summers removing a DC bias from the filtered in-phase and quadrature-phase signals;
a digital section responsive to the digital in-phase signal and the digital quadrature-phase signal from the analog section, said digital section including a wake-up detector and a data storage device, said wake-up detector generating a transceiver wake-up signal in response to the received in-phase and quadrature-phase signals and said storage device simultaneously storing the in-phase signal and the quadrature-phase signal when the wake-up detector is generating the wake-up signal; and
a processor responsive to the wake-up signal from the digital section, said processor retrieving data from the storage device when it receives the wake-up signal.
